# EUROPEAN PATENT APPLICATION

(11) **EP 4 835 424 A1**
(43) Date of publication of application: **04.11.2026**
(21) Application number: 24913643.3
(22) Date of filing: 20.12.2024
(51) Int. Cl.: G01L 5/22, G01L 5/00, G06F 3/01

(54) **DEVICE AND METHOD FOR MEASURING CONTACT INFORMATION**

(30) Priority: 29.12.2023 KR 20230197676
(71) Applicant: Aidin Robotics Inc., Anyang-si, Gyeonggi-do 14055 (KR); AJOU UNIVERSITY INDUSTRY-ACADEMIC COOPERATION FOUNDATION, Gyeonggi-do 16499 (KR)
(72) Inventor: KIM, Ui Kyum, Suwon-si, Gyeonggi-do 16485 (KR); JUNG, Da Woon, Suwon-si, Gyeonggi-do 16509 (KR); BU, Seong Un, Suwon-si, Gyeonggi-do 16499 (KR); LEE, Yoon Haeng, Anyang-si, Gyeonggi-do 14055 (KR); KIM, Yong Bum, Anyang-si, Gyeonggi-do 14055 (KR); SEOK, Dong Yeop, Anyang-si, Gyeonggi-do 14055 (KR); LEE, Seung Yeon, Anyang-si, Gyeonggi-do 14055 (KR); SIM, Jae Yoon, Anyang-si, Gyeonggi-do 14055 (KR)
(74) Representative: Patentanwälte Olbricht Buchhold Keulertz
(86) International application number: PCT/KR2024/020861
(87) International publication number: WO 2025/143700

(57) **Abstract**

A device for measuring contact information according to embodiments of the present disclosure includes a sensor capable of being attached to a surface of an object and a controller connected to the sensor, in which the controller is configured to define a shape of the surface of the object as a plurality of surface elements with known kinematic information, select any one of the plurality of surface elements to determine whether a contact point is within the selected surface element when contact is made on the surface, and identify the contact point in the selected surface element where the contact is made based on information about the surface element and a force and a torque detected by the sensor.

## Description

### Technical Field

The present disclosure relates to a device for and method of measuring contact information.

### Background Art

With advances in robotics, research into robots capable of interacting with humans, such as collaborative robots and interactive robots, is actively underway, and as a result, the importance of human-robot interaction (HRI) is growing. To implement robots capable of interacting with humans, it is essential for such robots to sense a surrounding environment in order to ensure human safety and protect the surrounding environment. One of various methods for this end is to measure physical contact information between robots and humans.

Various studies have been conducted on tactile sensors for measuring contact information to improve robots' sensing capabilities. For example, technology has been developed to detect the force generated upon contact using sophisticated skin sensors in order to implement flexible artificial skin that mimics human tactile capabilities. However, to integrate such tactile sensors into robotic systems, a large number of sensors are required and complex wiring for connecting the sensors makes applications to commercial robots difficult.

In addition, a conventional method of identifying contact points by calculating a geometric relationship between internal torques using force/torque sensors is applicable only when a robot surface may be expressed as an equation including a geometric relationship. While a simple shape is relatively easy to express as an equation, a complex surface has mathematical limitations in expressing such shape information as an equation.

The above-described information disclosed in the background art section is merely for improving the understanding of the background art, and thus may include information that does not constitute related art.

### Disclosure of Invention

### Technical Problem

A device and method of measuring contact information according to embodiments of the present disclosure may quickly sense contact information of a surface to obtain in real time shape information of not only a regular surface, but also a complex atypical surface, and may be applied to various industrial fields such as robots including atypical surfaces.

However, technical problems to be solved by embodiments of the present disclosure are not limited to the above-mentioned problem, and other problems not mentioned may be clearly understood by those of ordinary skill in the art from the description of the present disclosure described below.

### Solution to Problem

A device for measuring contact information according to embodiments of the present disclosure includes a sensor capable of being attached to a surface of an object and a controller connected to the sensor, in which the controller is configured to define a shape of the surface of the object as a plurality of surface elements with known kinematic information, select any one of the plurality of surface elements to determine whether a contact point is within the selected surface element when contact is made on the surface, and identify the contact point in the selected surface element where the contact is made based on information about the surface element and a force and a torque detected by the sensor.

The controller may be further configured to set a virtual line parallel to a direction of the force detected by the sensor to select a surface element for identifying the contact point, and select a surface element having a center of gravity with a shortest distance from a center of gravity of the virtual line.

The controller may be further configured to, when an intersection between the selected surface element the virtual line satisfies boundary conditions of three edges, determine that the contact point is within the selected surface element and identify a position of the contact point in the surface element, and when the intersection between the virtual line and the selected surface element does not satisfy boundary conditions of at least one of three edges, determine that the contact point is out of the selected surface element and identify a new surface element.

The controller may be further configured to select, as a new surface element, a surface element including one edge not satisfying a boundary condition and not including a vertex between two edges not satisfying boundary conditions, when the intersection does not satisfy the boundary condition of one of the three edges and satisfies the boundary conditions of the two edges.

The controller may be further configured to select, as a new surface element, a surface element not including the two edges not satisfying the boundary conditions and including the vertex between the two edges not satisfying the boundary conditions, when the intersection does not satisfy the boundary conditions of the two edges of the three edges and satisfies the boundary condition of the one edge.

A method of measuring contact information according to embodiments of the present disclosure includes defining, by a controller, a shape of a surface of an object as a plurality of surface elements with known kinematic information, detecting, by a sensor, contact with the object, selecting, by the controller, any one of the plurality of surface elements, determining, by the controller, whether a contact point is within the selected surface element, and identifying, by the controller based on information about the surface element and a force and a torque detected by the sensor, the contact point in the selected surface element where contact is made.

The selecting of the surface element may include setting, by the controller, a virtual line parallel to a direction of the force detected by the sensor and select a surface element having a center of gravity with a shortest distance from a center of gravity of the virtual line.

The determining of whether the contact point is within the selected surface element may include, when an intersection between the selected surface element the virtual line satisfies boundary conditions of three edges, determining, by the controller, that the contact point is within the selected surface element and identifying a position of the contact point in the surface element, and the determining of whether the contact point is within the selected surface element may include, when the intersection between the virtual line and the selected surface element does not satisfy boundary conditions of at least one of three edges, determining, by the controller, that the contact point is out of the selected surface element and identifying a new surface element.

The identifying of the new surface element may include, selecting, by the controller, as a new surface element, a surface element including one edge not satisfying a boundary condition and not including a vertex between two edges not satisfying boundary conditions, when the intersection does not satisfy the boundary condition of one of the three edges and satisfies the boundary conditions of the two edges in the determining of whether the contact point is within the selected surface element.

The identifying of the new surface element may include, selecting, by the controller, as a new surface element, a surface element not including the two edges not satisfying the boundary conditions and including the vertex between the two edges not satisfying the boundary conditions, when the intersection does not satisfy the boundary conditions of the two edges of the three edges and satisfies the boundary condition of the one edge in the determining of whether the contact point is within the selected surface element.

However, effects that may be obtained through the present disclosure are not limited to the above-described effects, and other technical effects not mentioned may be clearly understood by those of ordinary skill in the art from the description of the present disclosure described below.

### Advantageous Effects of Invention

A device for and method of measuring contact information according to embodiments of the present disclosure may divide a surface into a plurality of surface elements with known geometric information to quickly identify contact information of an atypical surface having an atypical surface shape as well as a regular surface shape. Therefore, by applying the device and method of measuring contact information of an atypical surface according to embodiments of the present disclosure to platforms including various shapes, such as robots or vehicles, the contact information may be quickly detected in real time.

### Brief Description of Drawings

The following drawings attached to the present specification illustrate embodiments of the present disclosure, and together with the description of the present disclosure described later, serve to allow the technical idea of the present disclosure to be understood. The present disclosure is not to be construed as limited to the matters described in the drawings.
FIG. 1 shows a measurement device according to embodiments of the present disclosure.
FIG. 2 schematically shows a controller according to embodiments of the present disclosure.
FIG. 3 shows an example of an atypical surface and an enlarged view thereof according to embodiments of the present disclosure.
FIG. 4 shows a state of contact with a surface element having an atypical surface according to embodiments of the present disclosure.
FIG. 5 shows a case where a contact point is within a surface element.
FIG. 6 shows a case where a contact point is out of a surface element.
FIGS. 7 and 8 show a case where a contact point is within a surface element showing a state in which a virtual line is defined to select an initial surface element.
FIGS. 9 and 10 show a case where a contact point is out of a surface element, showing a state in which a virtual line is defined to select an initial surface element.
FIGS. 11 and 12 show a case where a contact point is out of a surface element, showing a state in which a virtual line is defined to select an initial surface element.
FIG. 13 shows a method of measuring contact information according to embodiments of the present disclosure.
FIG. 14 shows a method of selecting a surface element according to embodiments of the present disclosure.
FIG. 15 shows a method of determining whether a contact point is located within a selected surface element according to embodiments of the present disclosure.
FIG. 16 shows a measurement device according to embodiments of the present disclosure to visualize a position of a contact point in real time.

### Best Mode for Carrying out the Invention

A device for measuring contact information of an atypical surface according to embodiments of the present disclosure includes a sensor capable of being attached to a surface of an object and a controller connected to the sensor, in which the controller is configured to define a shape of the surface of the object as a plurality of surface elements with known kinematic information, select any one of the plurality of surface elements to determine whether a contact point is within the selected surface element when contact is made on the surface, and identify the contact point in the selected surface element where the contact is made based on information about the surface element and a force and a torque detected by the sensor.

### Mode for the Invention

Embodiments of the present disclosure may be understood with reference to the description and drawings. The described embodiments may have various modifications and be implemented in different forms, and are not limited to the embodiments described herein. In addition, some or all of the features of each of various embodiments of the present disclosure may be combined with each other. The embodiments may be implemented independently of or in relation to each other. The described embodiments are provided as examples to ensure that the present disclosure is perfect and complete, and are intended to completely convey the spirit of the present disclosure to those of ordinary skill in the art. The present disclosure is replaceable in all modifications, equivalents, and the spirit and technical scope of the present disclosure. Accordingly, processes, elements, and techniques that are not necessary for those of ordinary skill in the art to fully understand the embodiments of the present disclosure may not be described.

Unless otherwise mentioned throughout the accompanying drawings and specification, the same reference numerals, letters, or combinations thereof indicate the same components, and thus redundant descriptions are omitted. Moreover, in order to clearly describe the present disclosure, parts unrelated to the description are omitted.

The relative sizes of elements, layers, and regions in the drawings may be exaggerated for clarity. The use of hatching and/or shading in the accompanying drawings is generally provided to clarify boundaries between adjacent elements. Thus, the presence or absence of hatching or shading does not indicate a particular material, material features, dimensions, proportions, commonality between figure elements, and/or any other features, attributes of the element, a preferred form or requirement related to the attributes, unless specified.

Various embodiments are described herein with reference to cross-sectional examples that are schematic illustrations of embodiments and/or intermediate structures. Thus, appearance of the drawings may therefore vary, for example as a result of manufacturing techniques and/or tolerances. A detailed structural or functional description disclosed herein may be merely an example for describing an embodiment according to the concept of the present disclosure. Therefore, embodiments disclosed herein are not to be construed as limited to the shapes of shown areas, and include, for example, a deviation in shape according to manufacturing.

The areas shown in the drawings are schematic in nature, and the shapes thereof are not intended to either illustrate or limit the actual shapes of device areas. Moreover, as recognized by those of ordinary skill in the art, the described embodiments may be modified in various ways without departing from the spirit or scope of the present disclosure.

Numerous specific details are set forth to provide thorough understanding of the various embodiments in the present specification. However, various embodiments may be carried out without these specific details or with one or more details. In other cases, well-known structures and devices are shown in the form of a block diagram to unnecessarily obscure various embodiments.

Spatially relative terms, such as "below", "above", "under", "on", and the like, may be used herein for ease of description to describe a relationship between one element or feature and another element(s) or feature(s) as illustrated in the drawings. Spatially relative terms may be intended to encompass different directions of the device in use or operation in addition to the direction depicted in the drawings. For example, when the device in the drawing is turned over, other elements or features described as "under" or "bottom" would then be oriented "on" the other elements or features. Thus, the example term "under" and "bottom" may encompass both directions of above and under. The device may be oriented in other directions (for example, rotated 90 degrees or oriented in other directions), and the spatially relative descriptors used herein should be interpreted accordingly. Likewise, when a first part is referred to as being arranged "on" a second part, it may mean that the first part is arranged on an upper side or a lower side of the second part.

An expression "viewed in a plane" means viewing an object from top, and an expression "in a schematic cross-sectional view" means taking a schematic cross-section by cutting the object vertically. The term "viewed from a side" means that a first object may be on or under or to a side of a second object, and vice versa. Additionally, the term "overlap" or "superpose" may include layer, stack, face, extending over, covering, or partly covering or any other suitable term as would be appreciated and understood by those of ordinary skill in the art. The expression "not overlapping" may include a meaning "away from" or "spaced apart from" and any other suitable equivalents as would be appreciated and understood by those of ordinary skill in the art. The terms "face" and "surface" mean that a first object may directly or indirectly oppose a second object. When a third object is between the first object and the second object, the first object and the second object may be understood as being indirectly opposed to each other, although still facing each other.

When an element, a layer, a region, or a component is mentioned as being "formed" in, "connected" to, or "coupled" to another element, another layer, another region, or another component, it may be directly formed on the element, the layer, the region, or the component, or the other element, layer, region, or component, or may be directly formed in, connected to, or coupled to the other element, layer, region, or component. In addition, "formed", "connected", or "coupled" may refer to direct or indirect coupling or connection or integral or non-integral coupling or connection of the elements, layers, regions, or components such that one or more elements, layers, regions, or components are present. For example, when an element, a layer, a region, or a component is mentioned as being "electrically connected" or "electrically coupled" to another element, layer, region, or component, it may be directly and electrically connected or coupled to the other element, layer, region, or component or another element, layer, region, or component may be present. However, "direction connection" or "direct coupling" may mean that one component is directly connected or coupled to the other component or is on the other component, without an intermediate component. Moreover, herein, when a part of a layer, a film, a region, a guide plate, etc., is formed on another part, a formation direction is not limited to an "on" direction and the part may be formed on a side of or under the other part. On the other hand, when a part of the layer, film, region, guide plate, etc., is formed "under" the other part, it may include not only a case where the part is "immediately under" the other part, but also a case where another part is present between the part and the other part. Meanwhile, other expressions describing a relationship between components like "between", "immediately between", or "adjacent to" or "immediately adjacent to" may be interpreted similarly. In addition, when an element or layer is mentioned as being "between" two elements or layers, it may mean that the element or layer is a sole element between the two elements or layers or another element is present therebetween.

For the purpose of the present specification, the expression such as "at least one" or "any one" does not limit the order of individual elements. For example, "at least one of X, Y and Z", "at least one of X, Y or Z", and "at least one selected from a group consisting of X, Y, and Z" may include X alone, Y alone, Z alone, and any combination of two or more of X, Y and Z. Likewise, the expression such as "at least one of A and B" and "at least one of A or B" may include A, B, or A and B. Herein, the term "and/or" generally includes all combinations of one or more related list items. For example, the expression "A and/or B" may include A, B, or A and B.

While terms such as "first", "second", "third", etc., may be used to describe various elements, components, regions, layers, and/or cross-sections, such components, components, regions, layers, and/or cross-sections are not limited by the terms. These terms may be used to distinguish one element, component, region, layer, or cross-section from another element, component, region, layer, or cross-section. Thus, a first element, component, region, layer, or cross-section discussed below may be referred to as a second element, component, region, layer, or cross-section, without departing from the spirit and range of the present disclosure. The description of an element as the "first" element may not either require or imply the presence of a second element or another element. The terms "first", "second", etc. may also be used herein to differentiate different categories or sets of elements. For clear expression, the terms "first", "second", etc., may represent "a first category (or a first set)", "a second category (or a second set)", etc., respectively.

The term used herein is used to describe particular embodiments, and is not intended to limit the present disclosure. As used herein, the singular expression is intended to encompass the plural expression and the plural expression is intended to encompass the singular expression, unless indicated otherwise in the context. The terms "comprise", "include", and/or "have" mean designation of the presence of a feature, an integer, and an operation specified in use herein. These expressions do not exclude the presence or addition of one or more other functions, steps, operations, components, and/or groups thereof.

When one or more embodiments are implemented differently, a specific process order may be different from a described order. For example, two processes described in succession may be performed substantially simultaneously, or may be performed in an order reverse to the order described.

The term "substantially", "about, or "approximately" and other similar terms are used as a term of approximation rather than a term of degree, and means satisfaction with an inherent deviation (e.g., a deviation range due to limitation of a measurement system) of a measured or calculated value. For example, "about" may mean within one or more standard deviations or within ±30 %, ±20 %, ±10 % or ±5 % of the stated value.

All of the terms used herein including technical or scientific terms have the same meanings as those generally understood by those of ordinary skill in the art of the present disclosure, unless they are defined other. The terms defined in a generally used dictionary should be interpreted as having the same meanings as the meanings in the context of the relevant technology and/or the present disclosure, and should not be interpreted as having ideal or exaggerated meanings unless they are clearly defined herein.

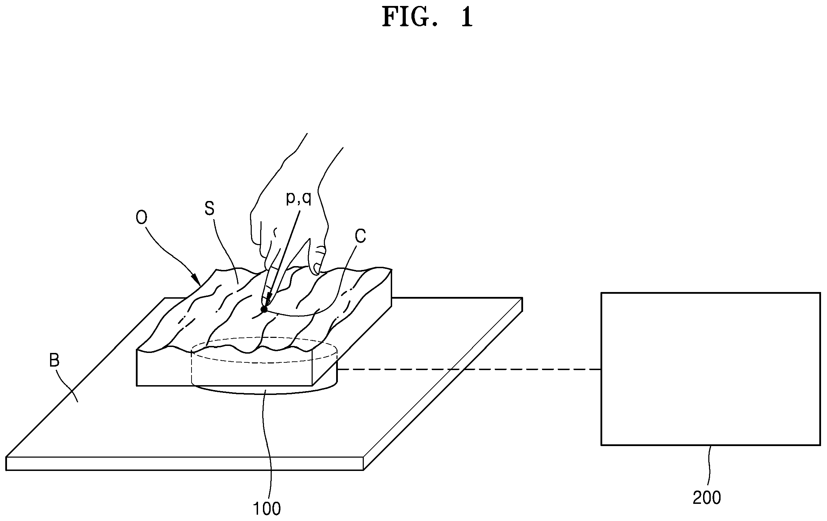

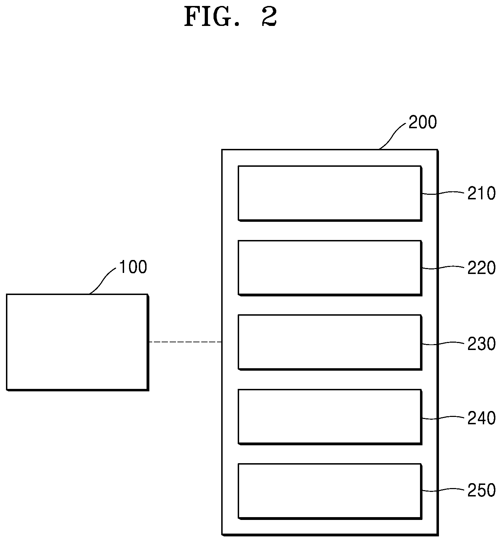

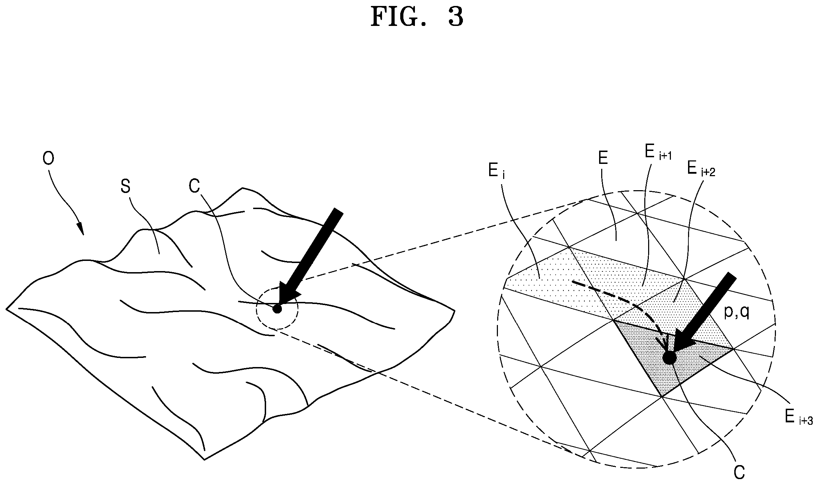

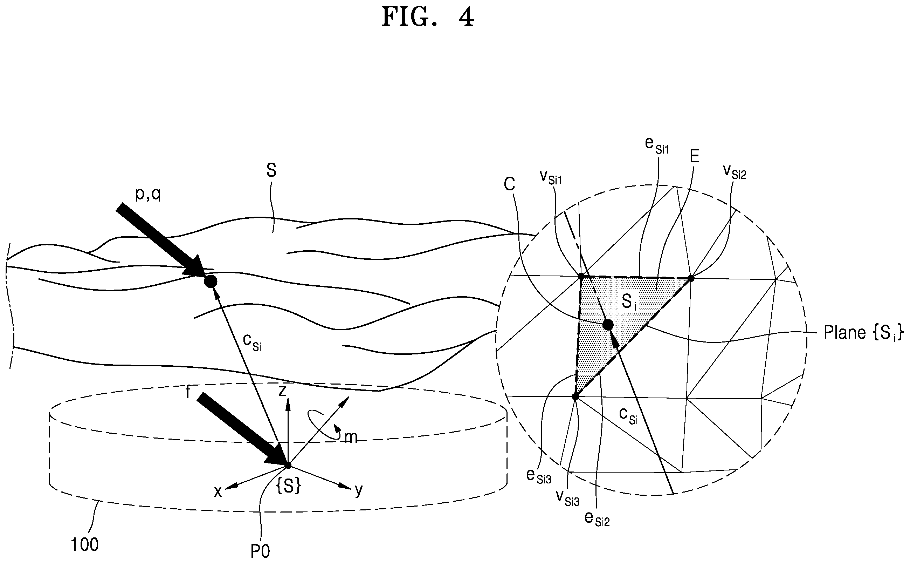

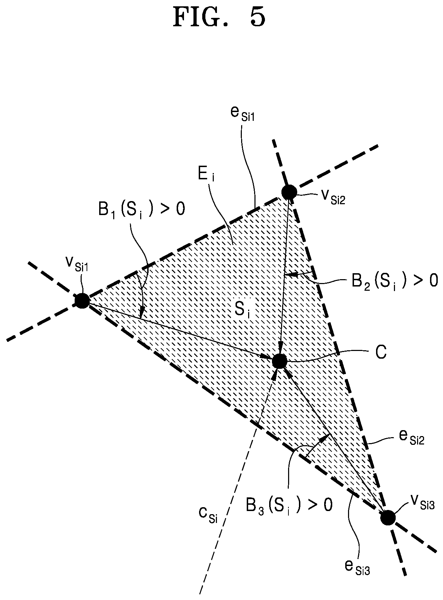

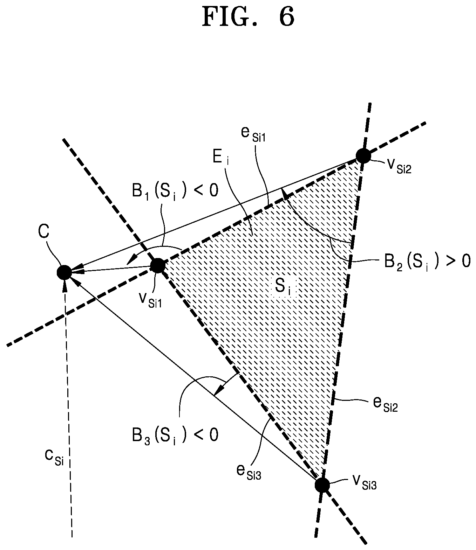

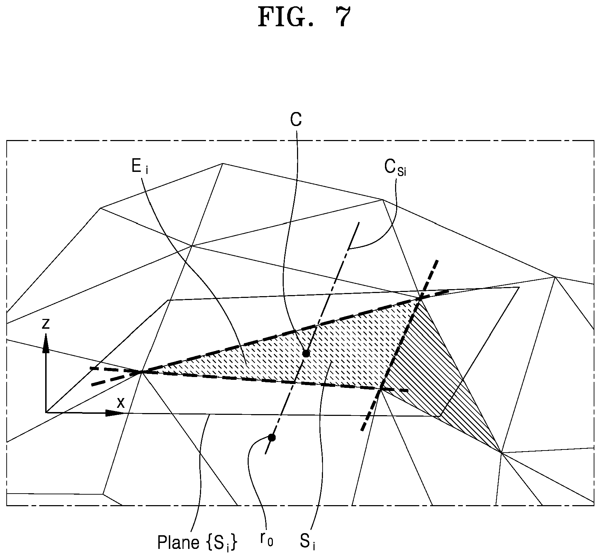

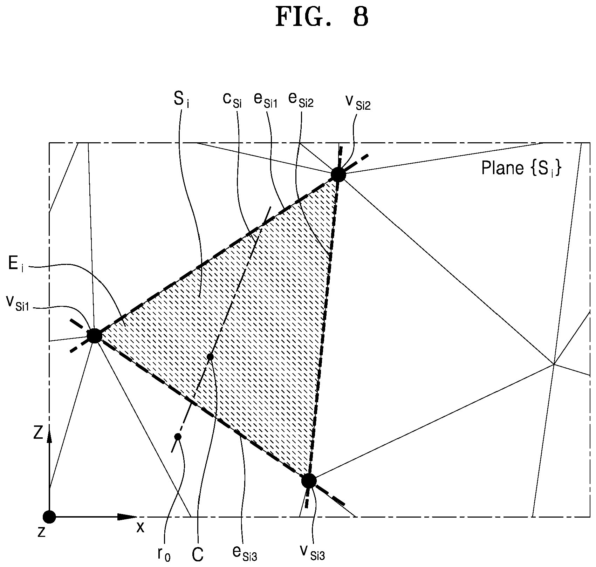

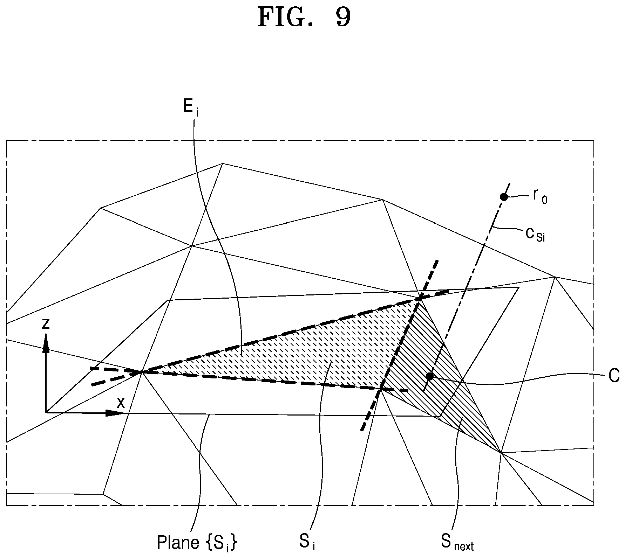

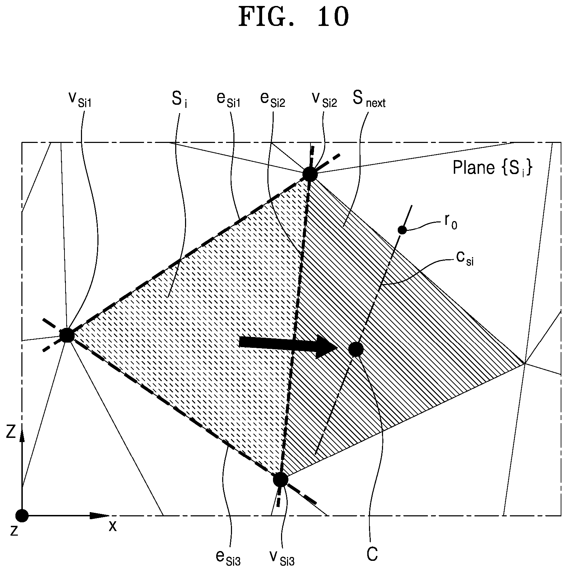

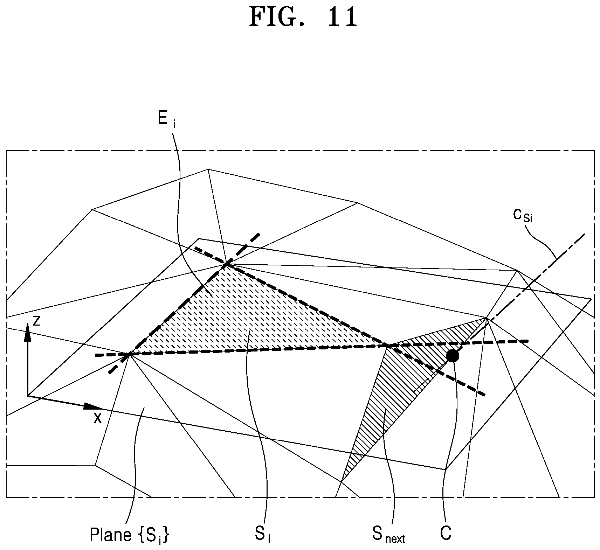

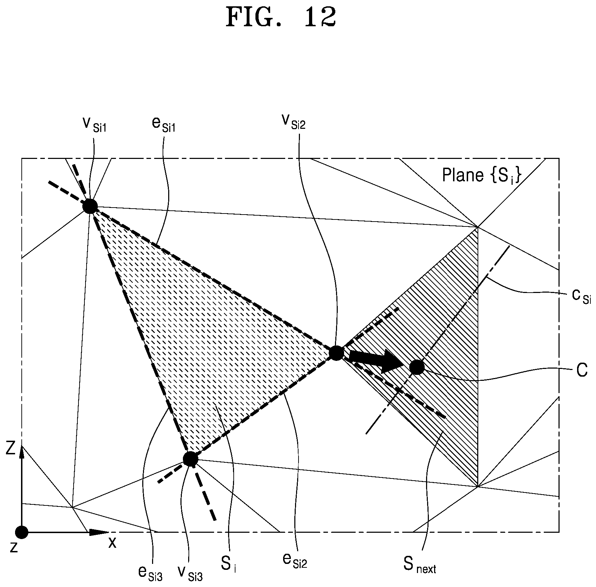

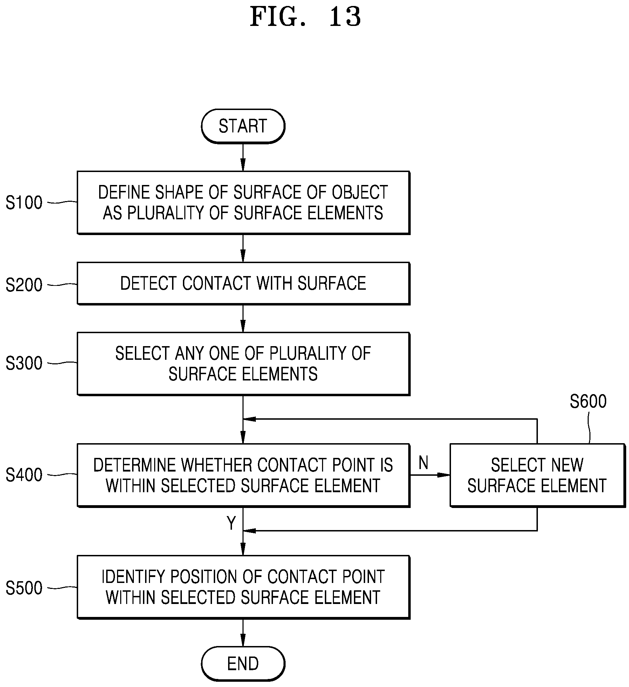

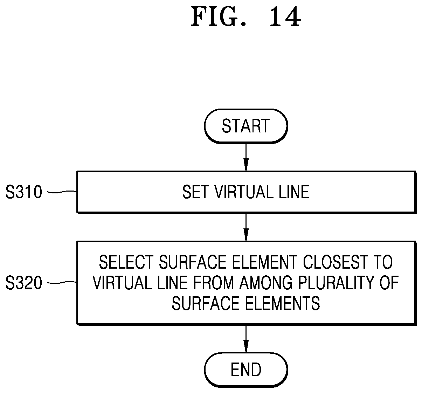

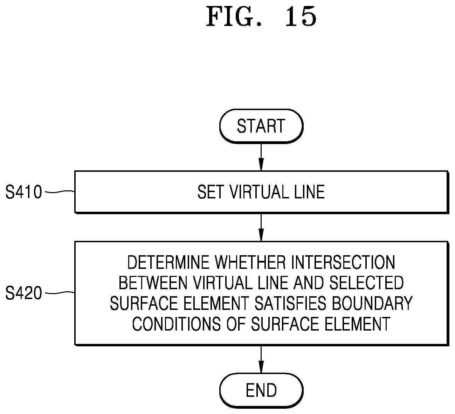

FIG. 1 shows a measurement device 10 according to embodiments of the present disclosure, FIG. 2 schematically shows a controller 200 according to embodiments of the present disclosure, FIG. 3 shows an example of an atypical surface S and an enlarged view thereof according to embodiments of the present disclosure, FIG. 4 shows a state of contact with a surface element E of the atypical surface S according to embodiments of the present disclosure, FIG. 5 shows a case where a contact point C is within the surface element E, FIG. 6 shows a case where the contact point C is out of the surface element E, FIGS. 7 and 8 show a case where the contact point C is within the surface element E, showing a state in which a virtual line is defined to select an initial surface element E, FIGS. 9 and 10 show a case where the contact point C is out of the surface element E, showing a state in which a virtual line is defined to select the initial surface element E, FIGS. 11 and 12 show a case where the contact point C is out of the surface element E, showing a state in which a virtual line is defined to select the initial surface element E, FIG. 13 shows a method of measuring contact information according to embodiments of the present disclosure, FIG. 14 shows a method of selecting the surface element E according to embodiments of the present disclosure, FIG. 15 shows a method of determining whether the contact point C is located within a selected surface element E according to embodiments of the present disclosure, and FIG. 16 shows a measurement device 10 according to embodiments of the present disclosure to visualize a position of the contact point in real time.

The measurement device 10 according to embodiments of the present disclosure may be a device capable of measuring contact information (e.g., contact position, force, torque, etc.) of an object O. The measurement device 10 may include a sensor 100 and a controller 200. The measurement device 10 may measure a force and a torque applied to the object O using the sensor 100, and the controller 200 may determine, based on the force and the torque measured by the sensor 100, a position of the object O where contact is made. For example, the object O may include a contact surface (e.g., a top surface) including a surface having a regular shape or an atypical surface S with a non-uniform or irregular shape. The atypical surface S may refer to a surface having a shape that may not be expressed by a single or simple formula. The object O may be an arm, a gripper, a finger, an external frame, or a display panel of a robot. The atypical surface S may be a surface of a robot that comes into contact with surrounding objects or people, or a touch surface of a display. Alternatively, the object O may include not only robots but also various types of vehicles or platforms, such as vehicles, ships, and aircraft.

The sensor 100 may come into contact with the object O and may measure the force and torque applied to the object O. For example, as shown in FIG. 1, the sensor 100 may be positioned on an opposite side of the atypical surface S below the object O. The sensor 100 may be mounted on a base B and may be capable of measuring the force and torque applied to the atypical surface S of the object O. For example, the sensor 100 may be a 6-axis force/torque sensor. The sensor 100 may include capacitive, strain gauge, piezoelectric, optical, or potentiometer types.

Although FIG. 1 shows the sensor 100 as a flat disc, the shape of the sensor 100 is not limited thereto. The sensor 100 may be wiredly/wirelessly connected to the controller 200 and may transmit information regarding the detected force and torque to the controller 200. A force f and a torque m measured by the sensor 100 may be the same as or different from actual force p and torque q, respectively, applied to the contact point C. For example, the force f may be equal to the force p, and depending on the position of the contact point C, the torque m may be equal to or different from the torque q.

The controller 200 may receive from the sensor 100, information about the force and torque measured by the sensor 100, and determine in real time, based on the received information and previously known information about the atypical surface S, a position on the atypical surface S at which contact is made, and magnitudes and directions of a force and a torque applied thereto. The controller 200 may visually display the force and torque measured by the sensor 100. The controller 200 may define the atypical surface S of the object O as a plurality of surface elements E having predetermined shapes (i.e., with known kinematic information).

The controller 200 may use a direct circuit structure that performs each control function via one or more microprocessors or other control devices, such as memory, a processor, a logic circuit, and a look-up table, etc. The controller 200 may be implemented as a part of a module, a program, or a code including one or more executable instructions for performing a specific logical function. The controller 200 may include, or be implemented by, a processor such as a central processing unit that executes each function, a microprocessor, etc. The controller 200, which is a communication device capable of transmitting and receiving data with external devices, may include one or more combinations of a digital modem, an RF modem, an antenna circuit, a Wi-Fi chip, and related software and/or firmware. For example, the controller 200 may be implemented in a user device, such as a desktop computer, a laptop, a tablet PC, or a smartphone, or in a server.

The controller 200 may define the atypical surface S of the object O as the plurality of surface elements E through modeling. Here, each surface element E may be a two-dimensional element with known kinematic information, and may be a circle, an ellipse, or a polygon such as a triangle, a rectangle, or a pentagon. For example, the controller 200 may use a triangle mesh structure scheme to define the atypical surface S of the object O as the plurality of surface elements E. Each surface element E may be a triangle having the same or different sizes and/or shapes. The atypical surface S may have a mesh structure including the plurality of surface elements E. For convenience, the following description will be mainly made of a case where the surface element E is a triangle. A method of defining the atypical surface S using the plurality of surface elements E is not specially limited and use well-known algorithms. For example, the controller 200 may use a well-known algorithm to define the atypical surface S with a plurality of triangular mesh structures. The controller 200 may either store a plane equation including each surface element E in advance or calculate the plane equation including each surface element E during a modeling process.

When the surface element E is a triangle, each surface element E may have three vertices and may include three edges connecting two vertices. Each surface element E may include one face having three edges. The controller 200 may include information about vertices, edges, faces, and normal vectors for faces, as the kinematic information of each surface element E.

When the sensor 100 detects contact, the controller 200 may perform an operation of selecting one of the plurality of surface elements E forming the atypical surface S to measure contact information. For example, the controller 200 may select one of the plurality of surface elements E. A process of selecting the surface element E may be performed randomly or according to predetermined conditions. For example, the controller 200 may set a virtual line based on the force and torque measured by the sensor 100, and select the surface element E that is closest to the virtual line from among the plurality of surface elements E. The selected surface element E may be the initial surface element E. Here, the virtual line may be parallel to the direction of the force detected by the sensor 100 and may pass through any point r0. The point r0 may be a point calculated from the force f and torque m measured by the sensor 100.

The controller 200 may determine whether the contact point C is within the selected surface element E. For example, the controller 200 may set a virtual line passing through the selected surface element E and calculate an intersection between the virtual line and the surface element E. Furthermore, the controller 200 may determine whether the intersection point is within three edges of the selected surface element E, that is, whether the intersection satisfies a boundary condition of the three edges. As described above, as the controller 200 already knows the kinematic information for each surface element E, the controller 200 may set the boundary condition (an edge equation) for edges of the selected surface element E. When the intersection is within the three edges of the selected surface element E, it may be determined that the intersection is the actual contact point C where contact is made and the contact point C is within the selected surface element E. When the contact point C is outside the three edges of the selected surface element E, the controller 200 may determine that the contact point C is out of the selected surface element E.

The controller 200 may determine that the intersection is within the selected surface element E when the intersection satisfies the boundary condition of all the three edges. The controller 300 may determine the intersection between the selected surface element E and the virtual line as the contact point C. When the controller 200 determines that the intersection is out of the selected surface element E, the controller 200 may determine that the contact point C is not within the initial surface element E and may select a new surface element E expected to include the contact point C. For example, when the contact point C satisfies the boundary condition of two edges of the selected surface element E but does not satisfy the boundary condition of one edge (i.e., when the contact point C is within the two edges, but out of the one edge, of the selected surface element E), the controller 200 may select, as the new surface element E, a surface element E included in a plane including an edge not satisfying the boundary condition and not including a vertex between the other two edges. For example, when the intersection does not satisfy the boundary condition of two edges of the selected surface element E but satisfies the boundary condition of one edge (i.e., when the contact point C is out of the two edges, but within the one edge, of the selected surface element E), the controller 200 may select, as the new surface element E, a surface element E included in a plane not including two edge not satisfying the boundary condition and including a vertex between the two edges. For example, when the intersection does not satisfy the boundary condition of all the three edges (that is, the contact point is out of the three edges of the selected surface element E), the controller 200 may select the new surface element E. For example, the controller 200 may reset the virtual line and select, from among the remaining surface elements E excluding the initially selected surface element E, the surface element E closest to the virtual line.

The controller 200 may determine whether the intersection between the virtual line and the newly selected surface element E is out of the newly selected surface element E. When the intersection is out of the selected surface element E, the controller 200 may repeat a process of selecting the new surface element E as described above. When the intersection is within the selected surface element E, the controller 200 may identify a position of the contact point C within the selected surface element E as described above.

The controller 200 may include a modeling unit 210, a memory unit 220, a processing unit 230, a communication unit 240, and a display unit 250.

The modeling unit 210 may preprocess the atypical surface S of the object O to model the atypical surface S as the plurality of surface elements E with known kinematic information. For example, the modeling unit 210 may use a triangular mesh structure modeling technique described above to model the atypical surface S of the object O as a mesh structure including a plurality of triangles having the same or different sizes and/or shapes. The modeling unit 210 may model the atypical surface S as a triangular mesh structure using a known modeling technique. The number, size, and shape of surface elements E modeled by the modeling unit 210 are not specifically limited. The modeling unit 210 may differently set the number, size, and shape of surface elements E according to the size and shape of the atypical surface S. For example, the modeling unit 210 may model the atypical surface S as 1,000 to 100,000 surface elements E. As shown in FIG. 3, the modeling unit 210 may define the atypical surface S as a mesh structure including a plurality of triangular surface elements E. Although FIG. 3 shows the surface elements E having the same size and shape, the surface elements E may have different sizes and shapes according to the size and shape of the atypical surface S.

For example, as shown in FIG. 4, the surface element E defined by the modeling unit 210 may be a triangle, and may be located on a plane including three vertices and three edges. When the surface element E is represented by Si, the three vertices may be denoted as vSi1, vSi2, and vSi3, and the three edges as eSi1, eSi2, and eSi3. Here, the vertices and edges of each surface element E may be represented by vectors with a measurement point P0 of the sensor 100 as their origin. Furthermore, a plane containing the surface element E may be represented as {Si}. The modeling unit 210 may store the kinematic information of each defined surface element E in the memory unit 220.

The modeling unit 210 may be implemented as programs, applications, or other algorithms for modeling mesh structures, or as a device that includes such programs, applications, or other algorithms.

The memory unit 220 may store information for identifying the contact point C. For example, the memory unit 220 may store the kinematic information of a plurality of surface elements E defined by the modeling unit 210. The memory unit 220 may store vertices, edges, planes and normal vectors of each surface element E. The memory unit 220 may also store information about the force and torque detected by the sensor 100.

The processing unit 230 may identify contact information (e.g., the position of the contact point C of the atypical surface S, based on the force and torque detected by the sensor 100. The processing unit 230 may select one of the plurality of surface elements E defined by the modeling unit 210 and determine whether the contact point C is located within the selected surface element E.

The processing unit 230 may select one of the plurality of surface elements E to identify the contact point C. For example, when the sensor 100 detects contact, measure a force or a torque, and transmit the measured force or torque to the controller 200, the processing unit 230 may select the surface element E where the contact point C is expected to be located.

For example, as shown in FIG. 1, an external object or a person's body may apply a force p and a torque q to the contact point C on the atypical surface S of the object O. Here, the atypical surface S may be defined with the plurality of surface elements E by the modeling unit 210. The sensor 100 may measure the applied force and torque and transmit the measured force and torque to the controller 200, and the processing unit 230 may select the surface element E where the contact point C is expected to be located. For example, as shown in the enlarged view of FIG. 3, after any one surface element Ei is selected, it may be determined whether there is the contact point C. When the contact point C is not located on the corresponding surface element Ei, a process may be repeated by sequentially selecting other surface elements Ei+1, Ei+2, and Ei+3 to determine whether the contact point is therein.

The processing unit 230 may identify the position of the contact point C based on information about the force and torque detected by the sensor 100 and kinematic information of the surface element E defined by the modeling unit 210. For example, as shown in FIG. 4, when the force p and the torque q are applied to the contact point C of the atypical surface S, the force f and the force p measured by the sensor 100 have the same magnitude and direction, and the torque m and the torque q measured by the sensor 100 have a relationship as below.$m = q + cXp$

Here, c indicates a vector of the contact point C. When the surface element E selected by the processing unit 230 is an ith surface element E, it may be expressed as cSi, and a plane of the surface element E may be expressed as Si. In other words, the torque m measured by the sensor 100 may be a sum of the torque q applied to the contact point C and a cross product between the contact point C and the force p applied to the contact point C.

In addition, the processing unit 230 may identify the position of the contact point C from the three vertices, the three edges, a plane including the three vertices and the three edges, and a normal vector of each surface element E as information about the surface element E defined by the modeling unit 210 and stored in the memory unit 220.

FIG. 5 shows a case where the contact point C is located within the surface element E selected by the processing unit 230. For example, to identify the position of the contact point C, the processing unit 230 may select the initial surface element E. The kinematic information of the surface element E may be already calculated by the modeling unit 210 and stored in the memory unit 220. The processing unit 230 may retrieve the kinematic information corresponding to the surface element E from the memory unit 220. For example, when the surface element E selected by the processing unit 230 is the ith surface element E, the surface element E may have vertices vSi1, vSi2, and vSi3, and edges eSi1, eSi2, and eSi3. Furthermore, the surface element E including each vertex and edge may be Si. Furthermore, an inner region of the surface element E may correspond to an inner region of each edge, that is, a region that satisfies boundary conditions B1(Si) > 0, B2(Si) > 0, and B3(Si) > 0. The processing unit 230 may identify the contact point C that satisfies B1(Si) > 0, B2(Si) > 0, and B3(Si) > 0, based on a relationship between the force f and torque m measured by the sensor 100 and the force p and torque q applied to the contact point C, as mentioned above.

FIG. 6 shows a case where the contact point C is located out of the surface element E selected by the processing unit 230. When contact point csi does not satisfy the boundary conditions, the calculation unit (230) may select a different surface element (E). For example, as shown in FIG. 6, the contact point csi may not satisfy the boundary conditions B1(Si) > 0, B2(Si) > 0, and B3(Si) > 0 of the selected surface element E. In FIG. 6, B3(Si) < 0 such that the boundary conditions of the surface element E may not be satisfied (boundary conditions of two of the three edges of the surface element E may not be satisfied). In this case, the processing unit 230 may determine that the contact point csi is not located within the selected surface element E and may select a new surface element E.

When the sensor 100 identifies contact, measures a force and a torque, and transmits the measured force and torque to the controller 200, the processing unit 230 may select the initial surface element E from among the plurality of surface elements E to detect the contact point C. The processing unit 230 may select any one surface element E randomly or select the surface element E according to predetermined conditions for selecting the surface element E.

To reduce the time and processing required to identify the contact point C, the processing unit 230 may select the initial surface element E according to predetermined conditions. For example, the processing unit 230 may set a virtual line parallel to the force f detected by the sensor 100. Here, the virtual line may pass through the point r0 that may be calculated from the force f and torque m measured by the sensor 100. The processing unit 230 may select the surface element E with the shortest distance from the virtual line as the initial surface element E. The processing unit 230 may select the surface element E having a center of gravity with the shortest distance from a center of gravity of the point r0 as the initial surface element E. In other words, the processing unit 230 may set the virtual line set based on information about the force and torque measured by the sensor 100 and a distance between the virtual line and the surface element E (the center of gravity of the surface element E) as conditions for selecting the surface element E. Therefore, the processing unit 230 may select the initial surface element E such that the selected initial surface element E is adjacent to the surface element E in which the actual contact point C is located, thereby effectively reducing the time and processing for identifying the contact point C.

An operation performed by the processing unit 230 to select the initial surface element E may be as below. First, the processing unit 230 may a virtual line c as below. $c = r 0 + λf$

As mentioned before, m = q + cXf and may be expressed as r0 = (fXm)/(||f||²). That is, the virtual line c may be a line passing through the point r0 and parallel to the force f. Here, λ satisfies λ = nT(v - r0)/nTf where v indicates a vertex of the surface element E, n indicates a normal vector of the surface element E, and T indicates a transposed matrix.

The processing unit 230 may perform processing for selecting the surface element E having the center of gravity with the shortest distance from the center of gravity of the point r0 as the initial surface element E. ${arg min}_{i} \left‖\left({g}_{i}-{r}_{0}\right)-{\left({g}_{i}-{r}_{0}\right)}^{T}ff\right‖$

Here, gi denotes the center of gravity of the surface element E. The processing unit 230 may select the surface element E satisfying the foregoing conditions as the initial surface element E for identifying the contact point C. In other words, the processing unit 230 may set the virtual line passing through the point r0 from the information about the force f and torque m measured by the sensor 100 and select the surface element E having the shortest distance from the virtual line, thereby selecting as the initial surface element E, the surface element E adjacent to the surface element E where the actual contact point C is located.

After selecting the initial surface element, the processing unit 230 may identify the position of the contact point C based on the information about the force and torque detected by the sensor 100 and the information about the surface elements E defined by the modeling unit 210, as described before.

FIGS. 7 and 8 show a case where the contact point C is located within the selected surface element E.

As described above, the processing unit 230 may select the initial surface element E. Here, when the surface element E is the ith surface element, it may be denoted by Si, and a plane including Si may be denoted by {Si}. In addition, the virtual line may be represented by cSi. As described above, the virtual line cSi may pass through the point r0 and may be parallel to the force f.

The processing unit 230 may calculate the intersection between the virtual line cSi and the selected surface element E based on the kinematic information of the selected surface element E, and determine whether the intersection is within the selected surface element E, that is, satisfies the boundary conditions of the selected surface element E. For example, the processing unit 230 may determine whether the intersection satisfies the boundary conditions of the selected surface element E, based on the kinematic information of the selected surface element E, such as vertices, edges, a plane, and a normal vector of the selected surface element E. As shown in FIGS. 7 and 8, when the intersection satisfies the boundary conditions of the selected surface element E, i.e., the intersection is within three edges of the selected surface element E, the processing unit 230 may determine that the contact point C is within the selected surface element E and determine the intersection as the contact point C.

FIGS. 9 and 10 show a case where the contact point C is out of the selected surface element E. For example, FIGS. 9 and 10 show a case where the boundary condition of one of the three edges of the selected surface element E is not satisfied.

As described above, the processing unit 230 may select the initial surface element E. Here, when the surface element E is the ith surface element, it may be denoted by Si, and a plane including Si may be denoted by {Si}. In addition, the virtual line may be represented by cSi. As described above, the virtual line cSi may pass through the point r0 and may be parallel to the force f.

The processing unit 230 may calculate the intersection between the virtual line cSi and the selected surface element E based on the kinematic information of the selected surface element E, and determine whether the intersection is within the selected surface element E, that is, satisfies the boundary conditions of the selected surface element E. For example, the processing unit 230 may determine whether the intersection satisfies the boundary conditions of the selected surface element E, based on the kinematic information of the selected surface element E, such as vertices, edges, a plane, and a normal vector of the selected surface element E. As shown in FIGS. 9 and 10, when the intersection does not satisfy the boundary conditions of the selected surface element E, that is, the intersection does not satisfy the boundary condition of one edge among the boundary conditions of the three edges of the selected surface element E, it may be determined that the contact point C is not within the selected surface element E.

In this case, the processing unit 230 may select the new surface element E to identify the contact point C. For example, as shown in FIG. 10, the processing unit 230 may select the new surface element E including one edge satisfying the boundary condition and not including a vertex between two edges not satisfying the boundary conditions. The processing unit 230 may re-calculate the intersection between the virtual line cSi and the selected surface element E from the surface element E, and determine whether the intersection is within the selected surface element E, that is, satisfies the boundary conditions of the selected surface element E. The processing unit 230 may repeat a process of determining the intersection as the contact point C when the intersection is within the selected surface element E and selecting the new surface element E when the intersection is out of the selected surface element E.

FIGS. 11 and 12 show a case where the contact point C is out of the selected surface element E. For example, FIGS. 11 and 12 show a case where the boundary condition of one of the three edges of the selected surface element E is not satisfied.

As described above, the processing unit 230 may select the initial surface element E. Here, when the surface element E is the ith surface element, it may be denoted by Si, and a plane including Si may be denoted by {Si}. In addition, the virtual line may be represented by cSi. As described above, the virtual line cSi may pass through the point r0 and may be parallel to the force f.

The processing unit 230 may calculate the intersection between the virtual line cSi and the selected surface element E based on the kinematic information of the selected surface element E, and determine whether the intersection is within the selected surface element E, that is, satisfies the boundary conditions of the selected surface element E. For example, the processing unit 230 may determine whether the intersection satisfies the boundary conditions of the selected surface element E, based on the kinematic information of the selected surface element E, such as vertices, edges, a plane, and a normal vector of the selected surface element E. As shown in FIGS. 11 and 12, when the intersection does not satisfy the boundary conditions of the selected surface element E, that is, the intersection does not satisfy the boundary condition of one edge among the boundary conditions of the three edges of the selected surface element E, it may be determined that the contact point C is not within the selected surface element E.

In this case, the processing unit 230 may select the new surface element E to identify the contact point C. For example, as shown in FIG. 12, the processing unit 230 may select the new surface element E including a vertex between two edges satisfying the boundary conditions and not including one edge not satisfying the boundary condition. The processing unit 230 may re-calculate the intersection between the virtual line cSi and the selected surface element E from the surface element E, and determine whether the intersection is within the selected surface element E, that is, satisfies the boundary conditions of the selected surface element E. The processing unit 230 may repeat a process of determining the intersection as the contact point C when the intersection is within the selected surface element E and selecting the new surface element E when the intersection is out of the selected surface element E.

An operation, performed by the processing unit 230, of determining whether the intersection between the selected surface element E and the virtual line satisfies the boundary conditions may be performed as below.

First, the processing unit 230 may calculate the virtual line cSi passing through the selected surface element E as below. $cSi = r 0 + λSif$

Here, λSi = niT(vSi - r0)/niTf where ni indicates normal vector of the plane {Si} including a plane Si of the surface element E, T indicates the transposed matrix, and vSi indicates a vertex included in the surface element E.

The processing unit 230 may set the boundary conditions for each edge included in the surface element E as below. $Bj \left(Si\right) = \left(cSi-vSij\right) \times eSij , \left.j∈1, 2, 3\right\}$

Here, vSij indicates each vertex included in the surface element E, eSij indicates each edge included in the surface element E, and may be expressed as below. $eSi 1 = vSi 2 - vSi 1 , eSi 2 = vSi 3 - vSi 2 , eSi 3 = vSi 1 - vSi 3$

When csi is within the edge of the surface element E, the boundary condition may have a non-negative value. The processing unit 230 may determine, for each edge (e.g., three edges), whether csi satisfies the boundary conditions of the surface element E. For example, the processing unit 230 may count the number of boundary conditions with non-negative values, and when the number of such boundary conditions is 3, the processing unit 230 may determine that the contact point C is located within the selected surface element E. When the number of such boundary conditions is 2, the processing unit 230 may determine that the contact point C is located outside the selected surface element E and on an outer side of one edge of the surface element E. When the number of such boundary conditions is 1, the processing unit 230 may determine that the contact point C is located outside the selected surface element E and on an outer side of two edges of the surface element E. When the number of such boundary conditions is 1, the processing unit 230 may select the new surface element E.

When the number of boundary conditions with non-negative values is 2, the processing unit 230 may select the new surface element E having the plane Si including one edge not satisfying the boundary condition and not including a vertex between two edges satisfying the boundary conditions.

When the number of boundary conditions with non-negative values is 1, the processing unit 230 may select the new surface element E having the plane Si including a vertex between two edges not satisfying the boundary conditions and not including the two edges not satisfying the boundary conditions.

The communication unit 240 may enable the controller 200 to transmit and receive data to and from the sensor 100 or other external device. For example, the communication unit 240 may be connected to the sensor 100 wiredly or wirelessly, receive information about a force and a torque, measured by the sensor 100, and transmit them to the memory unit 220 and the processing unit 230. Alternatively, the communication unit 240 may transmit contact information of the measured atypical surface S to an external device, etc.

The display unit 250 may display the position of the contact point C identified by the processing unit 230. For example, the display unit 250, which is a display device included in the controller 200, may display the position of the contact point C identified in real time by the processing unit 230. The display unit 250 may visualize the atypical surface S based on information about the surface element E of the atypical surface S defined by the modeling unit 210, and express the position of the contact point C on the visualized atypical surface S in real time.

A method of measuring the contact information of the atypical surface S will be described. The method of measuring contact information of an atypical surface S may include defining a surface shape of the object O as the plurality of surface elements E, detecting contact on the surface, selecting one of the plurality of surface elements E, determining whether the contact point C is located within the selected surface element E, identifying the position of the contact point C within the selected surface element E, and selecting a new surface element E. A measurement device 10 may be used to measure contact information.

First, the surface of the object O having surface information to be measured may be modeled. For example, the controller 200 (e.g., the modeling unit 210) may define the atypical surface S of the object O as the plurality of surface elements E. The controller 200 may model the atypical surface S of the object O as the plurality of surface elements E to have a triangular mesh structure, and store information about each surface element E (e.g., positions of vertices and edges, the surface element E, and an equation of a plane including the surface element E, etc.).

Next, the sensor 100 may be positioned on the object O. The sensor 100 may be positioned on the surface of the object O, e.g., an on opposite side of the atypical surface S, and on a flat base B. The sensor 100 may be positioned at the center of the object O. The sensor 100 may be connected to the controller 200 wiredly or wirelessly.

The sensor 100 may then detect contact applied to the atypical surface S. For example, when the force p and the torque q are applied to the contact point C of the atypical surface S, the sensor 100 may detect the force f and the torque m. Herein, the force p and the force f may have the same direction and magnitude. The sensor 100 may transmit information regarding the measured force and torque to the controller 200.

The controller 200 (the processing unit 230) may identify the position of the contact point C based on information about the force and torque measured by the sensor 100 and previously known information about the atypical surface S. For example, the controller 200 may select one of the plurality of surface elements E. To reduce processing required to identify the contact point C, the controller 200 may use an algorithm for selecting the initial surface element E. For example, the controller 200 may set a virtual line parallel to the force measured by the sensor 100 and select as the initial surface element E, the surface element (E) having a center of gravity with the shortest distance from a center of gravity of the virtual line.

The controller 200 may determine whether the contact point C is within the selected surface element E. The controller 200 may set the virtual line parallel to the force measured by the sensor 100 and determine whether the intersection between the virtual line and the selected surface element E is within the selected surface element E. When the intersection is within the selected surface element E, the controller 200 may determine the intersection as the contact point C.

When there is no contact point C within the selected surface element E, the controller 200 may select the new surface element E. The controller 200 may select the new surface element E according to whether the intersection satisfies the boundary conditions of the surface element E (e.g., the number of edges satisfying the boundary conditions).

FIG. 16 shows a measurement device according to embodiments of the present disclosure visualizing a position of a contact point in real time. As shown in FIG. 16, when contact is made with an object having an atypical surface (e.g., a robot arm), the sensor may detect the contact in real time and transmit related data to the controller that may then identify a contact point in real time through the above-described operations. The controller may visualize and display the identified contact point in real time. In addition, the force and torque applied to the object may be visualized in real time using continuous lines (a continuous path, an arrow sign, and a smile sign of FIG. 16).

As such, the present disclosure has been described with reference to the embodiments shown in the drawings, but this is merely an example. It would be fully understood by those of ordinary skill in the art that various modifications and other equivalent embodiments are possible from the embodiments. Therefore, the true technical scope of the present disclosure should be defined by the appended claims.

### Industrial Applicability

The present disclosure may be used in industries related to a device and method of measuring contact information of an atypical surface.

## Claims

1. A device for measuring contact information, the device comprising:
a sensor capable of being attached to a surface of an object; and
a controller connected to the sensor,
wherein the controller is configured to define a shape of the surface of the object as a plurality of surface elements with known kinematic information, select any one of the plurality of surface elements to determine whether a contact point is within the selected surface element when contact is made on the surface, and identify the contact point in the selected surface element where the contact is made based on information about the surface element and a force and a torque detected by the sensor.

2. The device of claim 1, wherein the controller is further configured to set a virtual line parallel to a direction of the force detected by the sensor to select a surface element for identifying the contact point and select a surface element having a center of gravity with a shortest distance from a center of gravity of the virtual line.

3. The device of claim 2, wherein the controller is further configured to:
when an intersection between the selected surface element the virtual line satisfies boundary conditions of three edges, determine that the contact point is within the selected surface element and identify a position of the contact point in the surface element; and
when the intersection between the virtual line and the selected surface element does not satisfy boundary conditions of at least one of three edges, determine that the contact point is out of the selected surface element and identify a new surface element.

4. The device of claim 3, wherein the controller is further configured to select, as a new surface element, a surface element comprising one edge not satisfying a boundary condition and not comprising a vertex between two edges not satisfying boundary conditions, when the intersection does not satisfy the boundary condition of one of the three edges and satisfies the boundary conditions of the two edges.

5. The device of claim 3, wherein the controller is further configured to select, as a new surface element, a surface element not comprising the two edges not satisfying the boundary conditions and comprising the vertex between the two edges not satisfying the boundary conditions, when the intersection does not satisfy the boundary conditions of the two edges of the three edges and satisfies the boundary condition of the one edge.

6. A method of measuring contact information, the method comprising:
defining, by a controller, a shape of a surface of an object as a plurality of surface elements with known kinematic information;
detecting, by a sensor, contact with the object;
selecting, by the controller, any one of the plurality of surface elements;
determining, by the controller, whether a contact point is within the selected surface element; and
identifying, by the controller based on information about the surface element and a force and a torque detected by the sensor, the contact point in the selected surface element where contact is made.

7. The method of claim 6, wherein the selecting of the surface element comprises setting, by the controller, a virtual line parallel to a direction of the force detected by the sensor and select a surface element having a center of gravity with a shortest distance from a center of gravity of the virtual line.

8. The method of claim 7, wherein the determining of whether the contact point is within the selected surface element comprises, when an intersection between the selected surface element the virtual line satisfies boundary conditions of three edges, determining, by the controller, that the contact point is within the selected surface element and identifying a position of the contact point in the surface element, and
the determining of whether the contact point is within the selected surface element comprises, when the intersection between the virtual line and the selected surface element does not satisfy boundary conditions of at least one of three edges, determining, by the controller, that the contact point is out of the selected surface element and identifying a new surface element.

9. The method of claim 8, wherein the identifying of the new surface element comprises, selecting, by the controller as a new surface element, a surface element comprising one edge not satisfying a boundary condition and not comprising a vertex between two edges not satisfying boundary conditions, when the intersection does not satisfy the boundary condition of one of the three edges and satisfies the boundary conditions of the two edges in the determining of whether the contact point is within the selected surface element.

10. The method of claim 8, wherein the identifying of the new surface element comprises, selecting, by the controller as a new surface element, a surface element not comprising the two edges not satisfying the boundary conditions and comprising the vertex between the two edges not satisfying the boundary conditions, when the intersection does not satisfy the boundary conditions of the two edges of the three edges and satisfies the boundary condition of the one edge in the determining of whether the contact point is within the selected surface element.
